# EUROPÄISCHE PATENTSCHRIFT

(11) **EP 1 522 435 B1**
(45) Veröffentlichungstag und Bekanntmachung des Hinweises auf die Patenterteilung: **28.11.2007**
(21) Anmeldenummer: 04021441.3
(22) Anmeldetag: 09.09.2004
(51) Int. Cl.: B60H 1/00

(54) **Vorrichtung zum Verschliessen und Freigeben von Luftdurchtritts-Öffnungen und Klimaanlage mit einer derartigen Vorrichtung**
Device for closing and opening air passages and air conditioner with such a device
Equipement de fermeture et d'ouverture d'un passage d'air et climatisation munie d'un tel équipement

(30) Priorität: 08.10.2003 DE 10347247
(43) Veröffentlichungstag der Anmeldung: 13.04.2005
(73) Patentinhaber: Behr GmbH & Co. KG, 70469 Stuttgart (DE)
(72) Erfinder: Klingler, Dietrich, Dipl.-Ing., 73540 Heubach (DE); Schwahn, Werner, 71701 Schwieberdingen (DE)

(56) Entgegenhaltungen:
- EP-A- 1 344 664
- EP-A- 1 346 859
- EP-A- 1 348 582
- FR-A- 2 720 981
- FR-A- 2 764 547

## Beschreibung

Die Erfindung betrifft eine Vorrichtung zum Verschließen und Freigeben von Luftdurchtritts-Öffnungen, insbesondere für eine Kraftfahrzeug-Klimaanlage, gemäß dem Oberbegriff des Anspruchs 1.

Bei Kraftfahrzeug-Klimaanlagen sind in der Regel Klappen zur Regelung des Luftstroms vorgesehen, welche Luftdurchtritts-Öffnungen je nach Bedarf verschließen oder freigeben. Dabei kommt es jedoch häufig zu unerwünschten Geräuschen.

Ferner ist in der gattungsgemäße EP 1 348 582 A2 eine Rollbandkassette beschrieben, welche eine einzige zentrale Antriebs-Welle aufweist, auf die mehrere Bänder gewickelt sind, welche auf mit ihrem anderen Ende auf - getrennt ausgebildete - Neben-Wellen gewickelt sind, so dass die zentrale Antriebs-Welle bei einer Drehung alle Bänder gleichzeitig auf- bzw. abwikkelt.

Eine derartige Vorrichtung lässt jedoch noch Wünsche offen.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Vorrichtung zum Verschließen und Freigeben von Luftdurchtritts-Öffnungen vorgesehen, welche mindestens ein Band mit mindestens je einer Öffnung aufweist, welches über Wellen geführt und /oder auf Wellen aufwickelbar ist und je Band eine Antriebs-Welle vorgesehen ist, wobei eine Mehrzahl von Antriebs-Wellen vorgesehen ist, die über eine oder mehrere Getriebeverbindungen miteinander gekoppelt und gleichzeitig betätigbar sind. Dabei sind insbesondere Zahnrad-Getriebe geeignet. Derartige Zahnräder können einfach mittels Spritzgießens direkt an die entsprechende Antriebs-Welle angegossen werden, so dass die Fertigungskosten gering gehalten werden können. Ferner lässt sich eine derartige Vorrichtung einfach regeln, da die Bänder entsprechend ausgebildet und angeordnet sein können, so dass beispielsweise drei Luftdurchtritts-Öffnungen durch die Bänder verdeckt oder durch Öffnungen in den Bändern freigeben werden können und somit nur ein einziger Antrieb zum Betätigen aller drei Bänder erforderlich ist. Im Gegensatz zur DE 102 14 282 A1 sind die Bänder doppelt vor den Luftdurchtritts-Öffnungen angeordnet. Die doppelte Anordnung ermöglicht eine Öffnung "von der Mitte her".

Der Antrieb kann direkt oder indirekt, d.h. über eine weitere Getriebeverbindung o.ä., mit einer der Antriebs-Wellen verbunden sein, wobei es sich vorzugsweise um eine zentrale Antriebs-Welle handelt.

Bevorzugt wird eine derartige Vorrichtung, welche insbesondere als Rollbandkassette ausgebildet ist, in Kraftfahrzeug-Klimaanlagen verwendet, um den Luftstrom durch den Kondensator und den Verdampfer zu führen und dadurch die Luft zu temperieren. Eine derartige Vorrichtung funktioniert leise, ohne störende Klappengeräusche.

Im Folgenden wird die Erfindung anhand eines Ausführungsbeispiels unter Bezugnahme auf die Zeichnung im Einzelnen erläutert. In der Zeichnung zeigen:

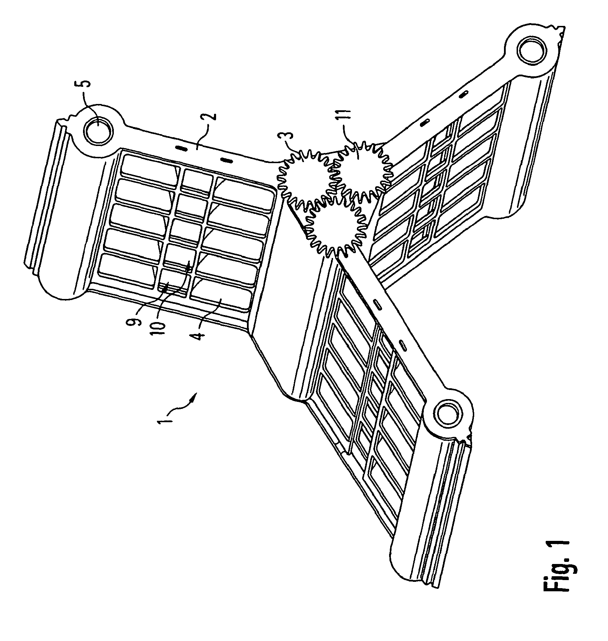

- Fig. 1: eine Ansicht einer Rollbandkassette gemäß dem Ausführungsbeispiel,
- Fig. 2: eine Ansicht des Gehäuses der Rollbandkassette von Fig. 1 mit angebrachten Abdeckungen,
- Fig. 3: eine Fig. 2 entsprechende Ansicht mit teilweise in Explosionsdarstellung und teilweise geöffnet dargestellten Abdeckungen,
- Fig. 4: eine schematische Draufsicht auf eine Klimaanlage im Kühlbetrieb mit der Rollbandkassette von Fig. 1, und
- Fig. 5: eine schematische Draufsicht auf eine Klimaanlage im Heizbetrieb mit der Rollbandkassette von Fig. 1.

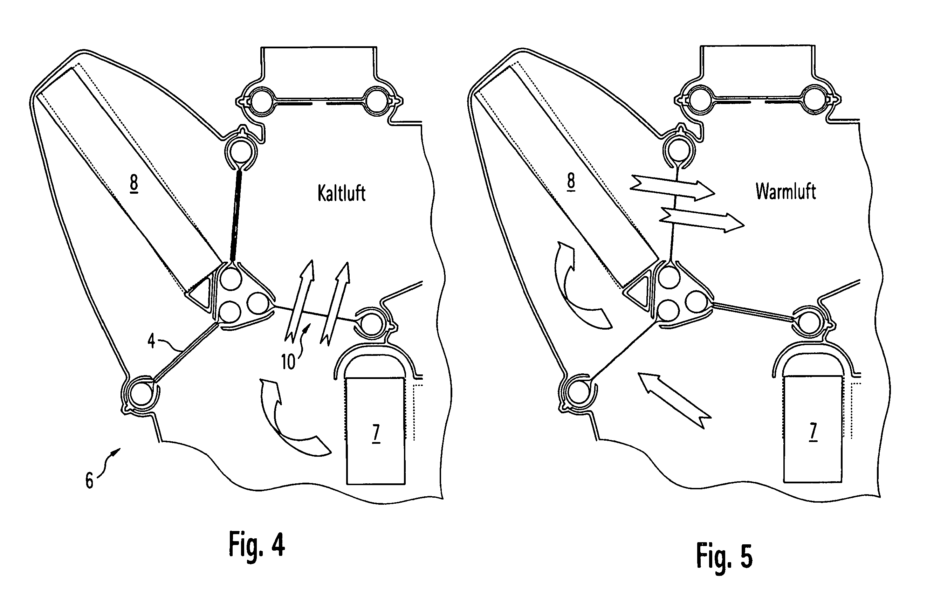

Eine Rollbandkassette 1, welche die erfindungsgemäße Vorrichtung zum Verschließen und Freigeben von Luftdurchtritts-Öffnungen bildet, weist ein tragendes Gehäuse 2, in dem drei Antriebs-Wellen 3 für drei Rollbänder 4 sowie drei Umlenk-Wellen 5 vorgesehen sind. Die Rollbandkassette 1 dient der Regelung des Luftdurchlasses in einer Kraftfahrzeug-Klimaanlage 6, welche einen Verdampfer 7 und einen Kondensator 8 aufweist (siehe Figuren 4 und 5), so dass sie durch den Strömungsweg der Luft die Temperierung derselben regelt. Um Luft durchlassen zu können, weisen die Rollbänder 4 Öffnungen 9 auf, die bei entsprechender Stellung der Rollbänder 4 einen Luftdurchlass durch im Gehäuse 2 der Rollbandkassette 1 vorgesehenen Luftdurchtritts-Öffnungen 10 freigeben. Der Luftstrom ist in den Figuren 4 und 5 durch Pfeile dargestellt, wobei in Fig. 4 Kaltluft dem Luftkanal-System und in Fig. 5 Warmluft dem Luftkanal-System zugeführt wird.

Gemäß dem vorliegenden Ausführungsbeispiel ist jedes der Rollbänder 4 als endloses Band ausgebildet, das um die dazugehörige Antriebs-Welle 3 und Umlenk-Welle 5 geschlungen ist. Ein Luftdurchlass ist demnach nur möglich, wenn das Rollband 4 derart angeordnet ist, dass zwei Öffnungen 9 bzw. eine entsprechend groß ausgebildete Öffnung 9 aufeinander zu liegen kommt. Dadurch lässt sich ein Öffnen von der Mitte der Luftdurchthtts-Öffnung 10 aus ermöglichen. Alternativ kann auch eine Aufwicklung der Bänder auf die Antriebs-Welle bzw. die zweite Welle vorgesehen sein.

Jede Antriebs-Welle 3 weist ein einstückig angegossenes oder anderweitig angeformtes Zahnrad 11 auf, wobei die einzelnen Antriebs-Wellen 3 derart angeordnet sind, dass die Antriebs-Welle 3, welche von einem nicht dargestellten Elektro-Motor angetrieben wird, zentral angeordnet ist, wobei ihr Zahnrad 11 mit den anderen Zahnrädern 11 der anderen beiden Antriebs-Wellen 3 in Eingriff ist, so dass sie ein Zahnrad-Getriebe bilden.

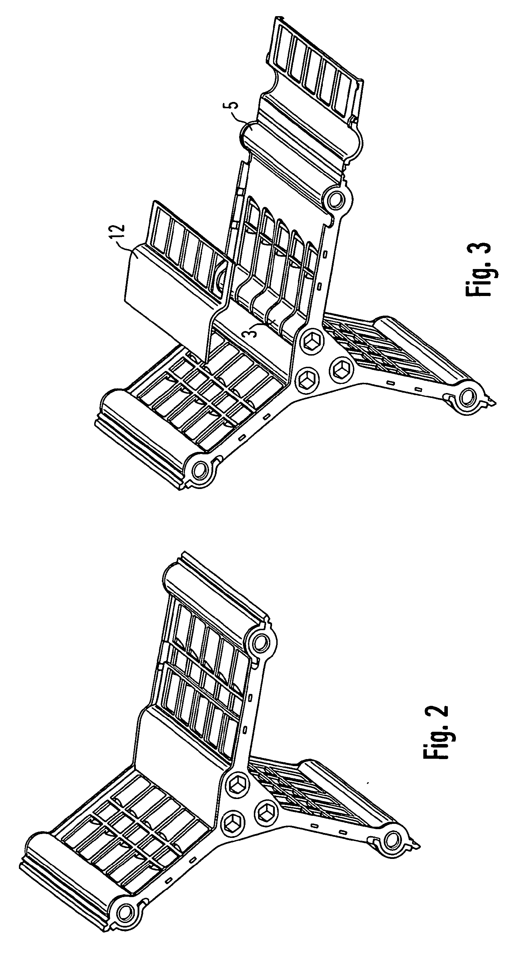

Zum Schutz der Antriebs- und Umlenk-Wellen 3 bzw. 5 sind Abdeckungen 12 vorgesehen, welche einen Teil des Gehäuses 2 bilden (siehe insbesondere Fig. 3), so dass die Rollbänder 4 im Inneren des Gehäuses 2 angeordnet sind und lediglich die Zahnräder 11 der Antriebs-Wellen 3 überstehen.

### Bezugszeichenliste

- 1: Rollbandkassette
- 2: Gehäuse
- 3: Antriebs-Welle
- 4: Rollband, Band
- 5: Umlenk-Welle
- 6: Kraftfahrzeug-Klimaanlage
- 7: Verdampfer
- 8: Kondensator
- 9: Öffnung
- 10: Luftdurchtritts-Öffnung
- 11: Zahnrad
- 12: Abdeckung

## Patentansprüche

1. Vorrichtung zum Verschließen und Freigeben von LuftdurchtrittsÖffnungen (10), welche mindestens ein Band (4) mit mindestens je einer Öffnung (9) aufweist, welches über Wellen (3, 5) geführt und/oder auf Wellen aufwickelbar ist, wobei je Band (4) eine Antriebs-Welle (3) vorgesehen ist, **dadurch gekennzeichnet, dass** eine Mehrzahl von Antriebs-Wellen (3) vorgesehen ist, die über eine oder mehrere Getriebeverbindungen miteinander gekoppelt und gleichzeitig betätigbar sind.

2. Vorrichtung nach Anspruch 1, **dadurch gekennzeichnet, dass** die Getriebeverbindung durch ein Zahnrad-Getriebe gebildet ist.

3. Vorrichtung nach Anspruch 1 oder 2, **dadurch gekennzeichnet, dass** die Antriebs-Welle (3) ein angeformtes Zahnrad (11) aufweist.

4. Vorrichtung nach einem der vorhergehenden Ansprüche, **dadurch gekennzeichnet, dass** drei Antrieb-Wellen (3) vorgesehen sind, wobei eine Antriebs-Welle (3) mit einem Antrieb direkt oder indirekt verbunden ist.

5. Vorrichtung nach Anspruch 4, **dadurch gekennzeichnet, dass** die mit dem Antrieb verbundene Antriebs-Welle (3) zentral angeordnet und mit mindestens zwei anderen Antriebs-Wellen (3) verbunden ist.

6. Vorrichtung nach einem der vorhergehenden Ansprüche, **dadurch gekennzeichnet, dass** Abdeckungen (12) für die Antriebs-Wellen (3) vorgesehen sind.

7. Vorrichtung nach einem der vorhergehenden Ansprüche, **dadurch gekennzeichnet, dass** die Vorrichtung eine Rollbandkassette (1) ist.

8. Klimaanlage für ein Kraftfahrzeug, **gekennzeichnet durch** eine Vorrichtung nach einem der Ansprüche 1 bis 7.

9. Klimaanlage nach Anspruch 8, **dadurch gekennzeichnet, dass** eine Luftdurchtritts-Öffnung (10) zwischen einem Verdampfer (7) und einem Luftkanal-System, das die Luft dem Fahrzeuginnenraum zuleitet, eine Luftdurchtritts-Öffnung (10) zwischen dem Verdampfer (7) und einem Kondensator (8) und eine Luftdurchtritts-Öffnung (10) zwischen dem Kondensator (8) und dem Luftkanal-System angeordnet ist.

## Claims

1. A device for closing and opening air passages (10) having at least one belt (4) which has at least one opening (9) and is mounted on shafts (3, 5) and/or can be wound onto shafts, one drive shaft (3) being provided per belt (4),
**characterised in that**
there is provided a plurality of drive shafts (3) which are connected to one another by means of one or more geared connections and can be actuated simultaneously.

2. A device in accordance with claim 1,
**characterised in that**
the geared connection takes the form of a toothed gearwork.

3. A device in accordance with claim 1 or 2,
**characterised in that**
the drive shaft (3) has a moulded-on gearwheel (11).

4. A device in accordance with one of the preceding claims,
**characterised in that**
three drive shafts (3) are provided, one such drive shaft (3) being connected directly or indirectly to a drive.

5. A device in accordance with claim 4,
**characterised in that**
the drive shaft (3) connected to the drive is positioned centrally and connected to at least two other drive shafts (3).

6. A device in accordance with one of the preceding claims,
**characterised in that**
covers (12) are provided for the drive shafts (3).

7. A device in accordance with one of the preceding claims,
**characterised in that**
the device is a roller belt cassette (1).

8. An air conditioner for a motor vehicle,
**characterised by**
a device in accordance with one of claims 1 to 7.

9. An air conditioner in accordance with claim 8,
**characterised in that**
one air passage (10) is positioned between an evaporator (7) and an air duct system which delivers the air to the passenger compartment, one air passage (10) is positioned between the evaporator (7) and a condenser (8), and one air passage (10) is positioned between the condenser (8) and the air duct system.

## Revendications

1. Equipement de fermeture et d'ouverture de passages d'air (10) comportant au moins une bande (4) avec chacune au moins un passage (9), ladite bande étant guidée par l'intermédiaire d'arbres (3, 5) et/ou pouvant être enroulée sur des arbres, un arbre moteur (3) étant prévu par bande (4), **caractérisé en ce qu'**une multitude d'arbres moteurs (3) sont prévus, lesdits arbres moteurs étant reliés entre eux par un raccordement ou plusieurs raccordements à engrenage et pouvant être actionnés simultanément.

2. Equipement selon la revendication 1, **caractérisé en ce que** le raccordement à engrenage est constitué d'un engrenage à pignons dentés.

3. Equipement selon la revendication 1 ou 2, **caractérisé en ce que** l'arbre moteur (3) comporte un pignon moulé (11).

4. Equipement selon l'une quelconque des revendications précédentes, **caractérisé en ce que** trois arbres moteurs (3) sont prévus, un arbre moteur (3) étant relié directement ou indirectement à une commande.

5. Equipement selon la revendication 4, **caractérisé en ce que** l'arbre moteur (3) relié à la commande est disposé centralement et relié à au moins deux autres arbres moteurs (3).

6. Equipement selon l'une quelconque des revendications précédentes, **caractérisé en ce que** des recouvrements (12) sont prévus pour les arbres moteurs (3).

7. Equipement selon l'une quelconque des revendications précédentes, **caractérisé en ce que** ledit équipement est constitué d'une cassette à bande roulante (1).

8. Climatisation destinée à un véhicule, **caractérisée par** un équipement selon l'une quelconque des revendications 1 à 7.

9. Climatisation selon la revendication 8, **caractérisée en ce qu'**un passage d'air (10) est disposé entre un évaporateur (7) et un système de conduits d'air envoyant l'air dans l'habitacle, **en ce qu'**un passage d'air (10) est disposé entre l'évaporateur (7) et un condenseur (8) et **en ce qu'**un passage d'air (10) est disposé entre le condenseur (8) et ledit système de conduits d'air.
